# EUROPÄISCHE PATENTSCHRIFT

(11) **EP 0 603 754 B1**
(45) Veröffentlichungstag und Bekanntmachung des Hinweises auf die Patenterteilung: **18.09.1996**
(21) Anmeldenummer: 93120371.5
(22) Anmeldetag: 17.12.1993
(51) Int. Cl.: F01N 3/28, F01N 7/16

(54) **Vorrichtung zur Reduzierung von Abgas-Schadstoffen, insbesondere für Kraftfahrzeuge**
Device for reducing exhaust emissions, especially for motor vehicles
Dispositif pour réduire les émissions d'échappement, en particulier pour véhicules à moteur

(30) Priorität: 22.12.1992 DE 9217551 U
(43) Veröffentlichungstag der Anmeldung: 29.06.1994
(73) Patentinhaber: LEISTRITZ AG & CO. Abgastechnik, D-90765 Fürth (DE)
(72) Erfinder: Stoepler, Walter, Dr., D-91074 Herzogenaurach (DE); Henninger, Richard, D-90419 Nürnberg (DE)
(74) Vertreter: Tergau, Enno, Dipl.-Ing.

(56) Entgegenhaltungen:
- EP-A- 0 415 101
- EP-A- 0 510 653
- DE-A- 3 007 642
- DE-A- 3 436 982
- DE-A- 3 820 981
- DE-C- 3 514 150
- FR-A- 2 220 038

## Beschreibung

Die Erfindung betrifft eine Vorrichtung zur Reduzierung von Abgas-Schadstoffen, insbesondere für Kraftfahrzeuge, im folgenden kurz Abgaskatalysator genannt. Derartige Katalysatoren bestehen im wesentlichen aus einem meist zweischaligen Gehäuse aus metallischem Werkstoff, in dem ein oder auch mehrere Katalysatorkörper gelagert sind. Die Katalysatorkörper sind in Strömungsrichtung der Abgase von mit einem katalytisch wirkenden Material beschichteten Kanälen durchsetzt. Der Katalysatorkörper besteht aus einem keramischen Werkstoff. Derartige, auch als Monolithe bezeichnete Keramikkörper, sind naturgemäß sehr bruchempfindlich und weisen gegenüber metallischen Werkstoffen eine zu vernachlässigende 931055 Wärmeausdehnung auf.

Die Monolithe sind mit elastischen Lagerungsmatten im Katalysatorgehäuse gelagert, die in einem sich zwischen Monolith und Gehäusewandung befindlichen Spaltraum angeordnet sind. Die Dicke der Lagerungsmatten ist im nichtmontierten Zustand größer als die lichte Weite des Spaltraumes. Sie sind deshalb im montierten Zustand in einem gewissen Ausmaß komprimiert, wodurch sich eine durch die elastischen Rückstellkräfte der Matten hervorgerufene auf die Gehäusewandung und die Umfangsfläche des Monolithen gerichtete Druckkraft und damit eine den Monolithen im Gehäuse fixierende Klemmwirkung ergibt. Die elastischen Rückstellkräfte der Lagerungsmatten müssen so groß sein, daß auch bei im heißen Betriebszustand aufgeweitetem Spaltraum noch eine ausreichend hohe Klemmwirkung vorhanden ist. Eine häufig genutzte Möglichkeit der Lagerung von Monolithen in Katalysatorgehäusen besteht darin, daß in dem Spaltraum zwischen Monolith und Gehäuse eine Faservliesmatte angeordnet ist, deren Fasern z.B. aus einem Mischoxid (Al₂O₃ und SiO₂) bestehenden. Der Hauptbestandteil dieser Faservliesmatten ist Al₂O₃. Bekannte Matten dieser Art weisen z.B. 97 % Al₂O₃ und 3 % SiO₂ oder bei einer anderen Art 72 % Al₂O₃ und 28 % SiO₂ auf.

Die bekannten Faservliesmatten bestehen aus nur wenige Millimeter langen Einzelfasern, die aufgrund der Vlies-Textur nur einen geringen Zusammenhalt untereinander haben. Um die Montage der Matten zu vereinfachen bzw. zu verhindern, daß die Arbeitsumgebung mit Fasern kontaminiert wird, sind die bekannten Vliesmatten in PE-Beutel eingeschweißt. Darin liegt ein gravierender Nachteil. Die Matten können nicht um den gesamten Umfang des Monolithen bzw. der Gehäuseinnenwand herumgelegt werden, da im Bereich der Schweißnaht der beiden Gehäusehälften das Polyethylen schmelzen, in die Schweißnaht fließen, dort verbrennen und zur Gasentwicklung führen würde. Die Folge wäre eine nur ungenügend haltbare bzw. völlig unbrauchbare Schweißnaht. Da der Schweißnahtbereich freigelassen werden muß, entsteht im Abgaskatalysator ein unerwünschter Längskanal, durch den Abgase unter Umgehung des Monolithen hindurchströmen würden. Es sind also zusätzliche Abdichtungsmaßnahmen erforderlich. Dies geschieht üblicherweise dadurch, daß in Umfangsrichtung des oder der Monolithen eine Dichtschnur angeordnet ist. Diese Maßnahme bedeutet zusätzlichen Montage- und Kostenaufwand.

Ein weiterer Nachteil der bekannten Faservliesmatten besteht darin, daß sie im nichtverbauten Zustand eine um ein Vielfaches größere Dicke aufweisen, als die Lichte des Spaltes zwischen Monolith und Gehäuse beträgt. Die Montage eines herkömmlichen Katalysators mit den genannten Faservliesmatten ist deshalb aus verständlichen Gründen nicht ganz einfach und relativ zeitaufwendig.

In der US-PS 4,929,429 ist ein Abgaskatalysator beschrieben, bei dem der Monolith im Gehäuse ebenfalls durch eine Faservliesmatte gehaltert ist. Im unverbauten Zustand weist diese Matte eine Dicke von 2-25 cm auf. Wie in Spalte 3, 1. Abs. der genannten Patentschrift beschrieben ist, werden diese Matten zunächst auf eine Dicke von 0,4-2,5 cm komprimiert, um in einem zwischen dem Monolithen und den Gehäuse vorhandenen Spaltraum von 2-12 mm installiert zu werden. Damit die losen nach Art einer Streutextur angeordneten Einzelfasern zusammenhalten und in diesem komprimierten Zustand verharren, wird die Fasermatte mit einer Trägerfolie vernäht. Diese Art der Konfektionierung der Lagerungsmatten mag zwar deren Montierbarkeit erleichtern. Sie verhindert jedoch nicht, daß zusätzliche Dichtungsmaßnahmen erforderlich sind, um eine Umströmung des Monolithen mit Abgasen auszuschließen.

Die aus US-PS 4,929,429 bekannte Matte verhindert auch nicht die Kontamination des Arbeitsplatzes bzw. der Umwelt im Benutzungs- und Entsorgungsfalle mit gesundheitsschädlichen Faserfragmenten. Die für die Fasermatten der bekannten Abgaskatalysatoren verwendeten Fasern weisen eine Länge von etwa 5 cm und einen Durchmesser von 2-10 µm auf (vgl. Spalte 3, 2. Abs.). Aus arbeitsmedizinischer Sicht sind jedoch Keramikfasern mit einem kleineren Durchmesser als 3 µm als gesundheitlich bedenklich einzustufen.

Schließlich besteht ein weiterer Nachteil der genannten Faservliesmatten darin, daß sie eine gewisse Durchlässigkeit für den Abgasstrom aufweisen. D.h., die Abgase können an Stellen wo sie direkt mit der Faservliesmatte in Berührung kommen, beispielsweise in dem Abstandsraum zwischen zwei hintereinander angeordneten Monolithen, in die Lagerungsmatte eindringen und sie in Längsrichtung des Katalysatorgehäuses unter Umgehung der Monolithe durchströmen. Dies muß bei herkömmlichen Abgaskatalysatoren durch zusätzliche Abdichtungsmaßnahmen verhindert werden. Wie aufwendig diese zusätzlichen Abdichtungsmaßnahmen sein können, geht aus der DE-PS 38 35 841 C2 hervor. Dort ist ein Abgaskatalysator beschrieben, bei dem als Lagerungsmatten Blähglimmermatten (Quellmatten) verwendet werden. In den stirnseitigen Bereichen des bzw. der Monolithen ist die Lagerungsmatte durch ein in aufwendiger Weise ausgebildetes, als Dichtung dienendes Abstützelement ersetzt. Um eine Gasdichtigkeit zu erreichen, weist das Abstützelement eine Umhüllung aus einem mit Ausnehmungen vesehenen Blech, aus einem Drahtgewebe oder einem Quarzglasgewebe oder -gestrick auf. Der Kern des Abstützelements wird durch keramische Fasern gebildet. Diese Fasern sollen sich in dem Material der Umhüllung verhaken und dadurch eine Gasdichtigkeit und ein Kanten-Pulsationsschutz erreicht werden. In der DE 38 20 981 ist ein Abgas-Katalysator beschrieben, bei dem der oder die Monolite mit Hilfe einer Mineralfasermatte im Gehäuse gelagert sind. Als zusätzliche Abdichtungsmaßnahme, um das Eindringen von Abgasen in den Spaltraum zwischen Monolith und Gehäuse zu verhindern, wird vorgeschlagen, die Lagerungsmatte zumindest an ihren Stirnkantenbereichen mit einer zusätzlichen hochhitzebeständigen Hülle zu umgeben. Dem Gegenstand der DE 35 14 150 C1 liegt das Problem des Eindringens von Abgasen in den Spaltraum zwischen Monolit und Gehäuse und dem dadurch bedingten Ausblasen der Keramikfasern der Lagerungsmatte zugrunde. Dieses Problem wird durch Abdichtungsmaßnahmen gelöst, die darin bestehen, den Keramikfasern ein faserförmiges oder pulverförmiges Bindemittel aus Glas oder Kunststoff beizumengen. Dieses Bindemittel erweicht bei den Betriebstemperaturen des Abgaskatalysators und wird zähklebrig hochviskos und hält dadurch die Fasern brückenartig zusammen.

Bei dem Abgaskatalysator gemäß DE 38 35 841 C2 ist der Bereich des Eintritt- und Austrittstrichters wärmeisoliert. Während hierfür beispielsweise Faservliesmatten ohne Haltefunktion verwendet werden können, werden im Bereich der Monolithen Blähglimmermatten (Quellmatten) verwendet, die neben der Isolier- noch eine Haltefunktion erfüllen müssen. Dies ist insofern nachteilig, als sich dadurch der Fertigungs- und Montageaufwand durch Verwendung unterschiedlicher Matten erhöht.

Davon ausgehend ist es die Aufgabe der Erfindung, einen Abgaskatalysator vorzusehen, bei dem die genannten Nachteile nicht auftreten.

Die Lösung dieser Aufgabe besteht darin, daß die Lagerungsmatten Gestricke oder Gewirke aus einem aus Mineralfasern bestehenden Garn sind und daß die Lagerungsmatte in dem Spaltraum zwischen Gehäuse und Monolith ohne zusätzliche Abdichtung gegenüber den Abgasen angeordnet ist. Wenn von Gewirken oder Gestricken gesprochen wird, so sind darunter textile Flächengebilde zu verstehen, die aus einem oder mehreren Fadensystemen durch Maschenbildung hergestellt sind. Der Unterschied zwischen Gewirken und Gestricken besteht lediglich darin, daß beim Wirken die Maschen einer Maschenreihe gleichzeitig ausgebildet werden, während beim Stricken eine Masche nach der anderen entsteht. Die folgenden Ausführungen sind der Einfachheit halber auf Gestricke bezogen. Im Gegensatz zu einem Faservlies, bei dem die Einzelfasern nach Art einer Streutextur mit nur geringem gegenseitigem Zusammenhalt angeordnet sind, sind bei einem Gestrick die Einzelfasern zu einem Garn verarbeitet und dieses durch Maschenbildung und zu einem flächig-räumlichen Gebilde verknüpft. Gestricke weisen daher sowohl in Dicken- als auch in Breitenrichtung eine hohe Dehnung und Elastizität auf. Es hat sich nun gezeigt, daß die Elastizität insbesondere in Dickenrichtung von aus Mineralfasern hergestellten Gestricken derart ist, daß sie sich als Lagermaterial für die Monolithe von Abgaskatalysatoren eignen. Sie lassen sich im Gegensatz zu voluminösen Faservliesen, die bei der Montage auf ein Vielfaches ihrer Ausgangsdichte komprimiert werden müssen, äußerst einfach und schnell montieren. Ein weiterer Vorteil dieser Gestrick-Matten besteht darin, daß die Einzelfasern gegenüber einem Faservlies wesentlich stärker verbunden sind und folglich die Belastung der Umgebung mit Mikrofasern erheblich verringert ist. Dies liegt zum einen an der Bindung der Einzelfaser innerhalb des Garnes, zum anderen an der Verknüpfung des Garnes innerhalb des Gestrickes sowie darin, daß die Fasern endlos sind.

Faservliese sind, wie oben bereits ausgeführt, für Gasströme in gewissem Ausmaße durchlässig. Außerdem wird ein Faservlies bei Beaufschlagung mit pulsierenden heißen Abgasen erodiert. Der lockere Faserverbund des Vlieses wird dabei aufgelöst. Mit dem Abgasstrom können daher Faserfragmente und insbesondere "lungengängige" Mikrofasern in die Umwelt gelangen.

Die Maßnahme gemäß Anspruch 2 wirkt sich vorteilhaft auf die Elastizität des Gestrickes und insbesondere im Hinblick auf die gesundheitliche Gefährdung durch mineralische Mikrofasern aus. Dadurch, daß die Einzelfaser praktisch endlos ist, können Faserbruchstücke nur durch massive mechanische Einwirkung abgelöst werden.

Ein Vorteil des Werkstoffes Siliziumdioxid (Anspruch 3) liegt darin, daß es gegenüber beispielsweise dem sonst für Faservliesmatten häufig verwendeten Aluminiumoxid im Körper schneller abbaubar ist. Schon allein aus diesem Grunde ist dessen Gefährdungspotential geringer. Sie lassen sich problemlos durch das in Anspruch 4 genannte Verfahren herstellen. Der Vorteil des Spinndüsen-Verfahrens besteht darin, daß Fasern mit praktisch gleichbleibendem Durchmesser hergestellt werden können. Dadurch ist gewährleistet, daß nicht wie bei anderen Verfahren, beispielsweise dem Schleuderverfahren, Fasern mit sehr unterschiedlichen und auch unterhalb von 3 µm liegenden Durchmessern erzeugt werden. Mit dem genannten Verfahren können also Fasern hergestellt werden, die wie in Anspruch 5 angegeben, einen Durchmesser von mehr als 3 µm aufweisen. In Anspruch 6 ist ein vorteilhafter Faserdurchmesser genannt. Fasern mit diesem Durchmesser weisen eine ausreichende mechanische Stabilität auf und lassen sich problemlos zu Garnen bzw. Gestricken verarbeiten.

Die Gestricke aus Mineralfasern eignen sich sowohl für Isolationszwecke als auch zum Lagern von Monolithen. Die in einem Abgaskatalysator bestehenden Isolations- und Lagerungsaufgaben können daher mit ein und demselben Material gelöst werden. Dadurch, daß die genannten Gestricke praktisch gasdicht und erosionsbeständig sind, können zusätzliche Dichtungsmaßnahmen in den Stirnbereichen der Monolithe entfallen. Die Montage der erfindungsgemäßen Abgaskatalysatoren ist somit gegenüber jenen nach dem Stand der Technik vereinfacht. Aufgrund der reduzierten Teilezahl ist schließlich auch die Lagerhaltung vereinfacht.

Die Erfindung wird anhand eines in der beigefügten Zeichnung dargestellten Ausführungsbeispiels näher erläutert.

Es zeigen
- Fig. 1: eine perspektivische Darstellung eines zum Teil geöffneten Katalysators, und
- Fig. 2: eine schematische Schnittdarstellung, die die Anordnung von Katalysatorkörper und Gestrickmatte im Katalysatorgehäuse zeigt.

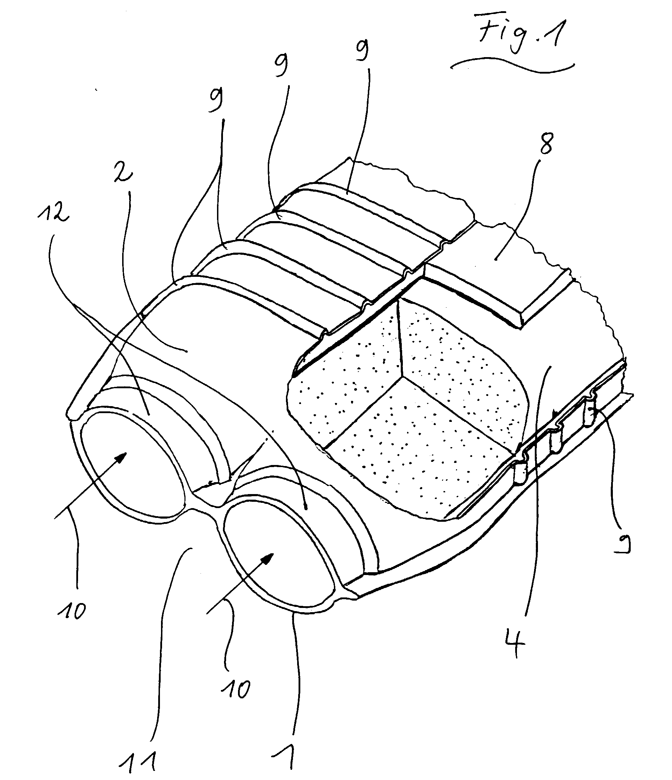

Wie aus Fig. 1 hervorgeht, besteht das Gehäuse 3 des erfindungsgemäßen Katalysators aus zwei Halbschalen 1,2. In dem Gehäuse sind zwei Monolithe 4,5 mit Radialabstand zum Gehäuse und mit Abstand 6 zueinander angeordnet. In dem Spaltraum 7 zwischen den Monolithen 4,5 und dem Gehäuse 3 liegt eine Gestrickmatte 8 unter radialer Kompression ein. Das Gehäuse 3 ist zur Erhöhung seiner Biege- und Verwindungsfestigkeit mit nach außen und gegebenenfalls nach innen vorspringenden Sicken 9 versehen.

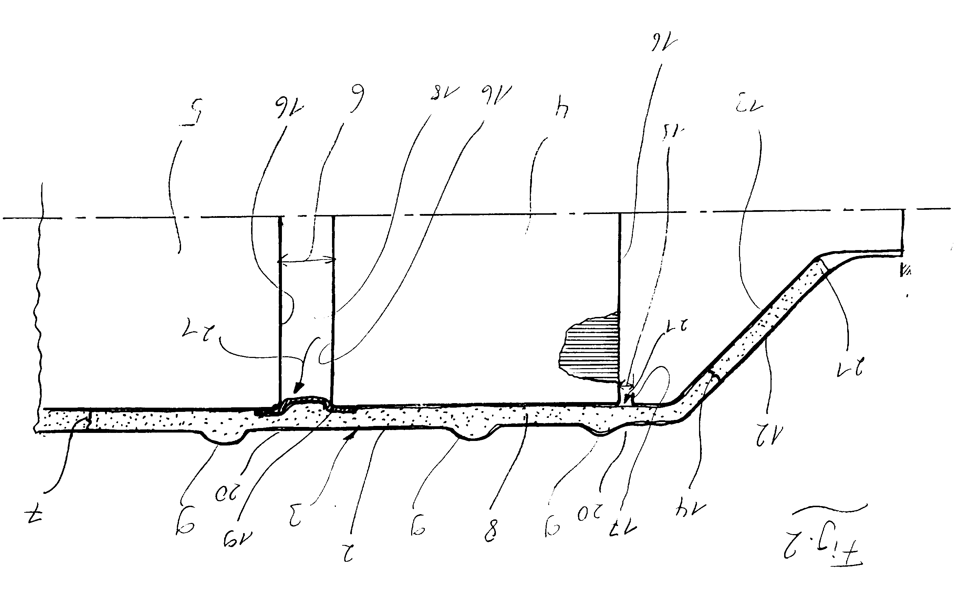

Das gegen die Strömungsrichtung 10 der Abgase weisende Einströmende 11 des Katalysatorgehäuses verjüngt sich zu zwei nebeneinander angeordneten Einströmtrichtern 12. Die Einströmtrichter 12 sind doppelwandig ausgeführt (siehe Fig.2), d.h., sie weisen eine äußere Wand und eine Innenwand 13 auf. Die äußere Wand wird durch die Gehäuseschalen 1,2 gebildet. Die Innenwand 13 ist mit Abstand zu den Gehäuseschalen 1,2 angeordnet, so daß zwischen den beiden Wänden ein Spaltraum 14 entsteht. Die lichte Weite des Spaltraumes 14 entspricht jener des Spaltraumes 7 zwischen den Monolithen 4,5 und dem Gehäuse 3 bzw. den Gehäuseschalen 1,2. Die Innenwand 13 endet mit Axialabstand vor der Stirnseite 16 des in Strömungsrichtung 10 zuerst angeordneten Monolithen 4. Auf diese Weise entsteht ein Axialspalt 15 zwischen dem Monolithen 4 und der Innenwand 13. Der Axialspalt 15 ist erforderlich, um eine Ausdehnung der Innenwand 13 im heißen Betriebszustand zu ermöglichen, ohne daß dabei das Ende 17 der Innenwand 13 an den Monolithen 4 anstößt. Dies könnte nämlich leicht zu einer Beschädigung des aus einem keramischen Material bestehenden Monolithen führen. Die Enden 17 sind radial nach innen umgebogen. Auf den Ringspalt 18 zwischen den beiden Monolithen 4,5 ist eine Abdeckung 19 gelegt, die beispielsweise ein Drahtgeflecht sein kann. Die Abdeckung 19 unterstützt die Gestrickmatte 8 im Bereich des Ringspaltes 18. Im Bereich des Axialspaltes 15 dagegen ist keine Unterstützung notwendig. In den an die Stirnseiten 16 der Monolithe 4,5 angrenzenden Bereichen 20 des Spaltraumes 7 sind im Gegensatz zu Abgaskatalysatoren nach dem Stande der Technik keine zusätzlichen Abdichtungen notwendig, um ein Einströmen von Abgasen in die Lagerungsmatten in Richtung der Pfeile 21 zu verhindern. Um bei einem erfindungsgemäßen Abgaskatalysator den oder die Monolithe 4,5 im Gehäuse 3 zu lagern und die Einströmtrichter 12 sowie die (nicht dargestellten) Auströmtrichter zu isolieren, sind somit nur insgesamt 2 Teile notwendig. Diese Teile sind zum einen eine Gestrickmatte 8, die sich vom Vorderende 21 des Spaltraumes 14 bis in den Spaltraum des oder der Ausströmtrichter (nicht dargestellt) erstreckt sowie die Abdeckung 19 des Ringspaltes 18. Bei Abgaskatalysatoren mit nur einem Monolithen entfällt natürlich der Ringspalt 18 und somit die Abdeckung 19, so daß in diesem Fall nur ein einziges Teil, nämlich die Gestrickmatte 8, notwendig ist, um die erforderlichen Dichtungs- und Halterungsfunktionen zu erfüllen.

Die Gestrickmatte 8 selbst besteht aus einem Garn, das sich aus mehreren Si₂O₂-Fasern zusammensetzt. Die Siliziumoxidfasern werden durch ein Spinndüsen-Verfahren hergestellt. Sie weisen einen praktisch gleichmäßigen Durchmesser von 6 µm auf. Die Dichte der Gestrickmatten beträgt im unmontierten Zustand 0,19 g/cm³, das entspricht einem Flächengewicht von 1700 g/qm bei einer Dicke von 9 mm. Nach der Montage sind die Gestrickmatten 8 auf eine der lichten Weite des Spaltraumes 7 bzw. des Spaltraumes 14 entsprechende Dicke von 4,2 mm komprimiert. Dies entspricht einer Dichte von 0,40 g/cm³.

### Bezugszeichenliste

- 1.: Halbschale
- 2.: Halbschale
- 3.: Gehäuse
- 4.: Monolith
- 5.: Monolith
- 6.: Abstand
- 7.: Spaltraum
- 8.: Gestrickmatte
- 9.: Sicke
- 10.: Strömungsrichtung
- 11.: Einströmende
- 12.: Einströmtrichter
- 13.: Innenwand
- 14.: Spaltraum
- 15.: Axialspalt
- 16.: Stirnseite
- 17.: Ende
- 18.: Ringspalt
- 19.: Abdeckung
- 20: Bereich
- 21: Vorderende

## Patentansprüche

1. Vorrichtung zur Reduzierung von Abgas-Schadstoffen, insbesondere für Kraftfahrzeuge, mit
- wenigstens einem in einem Gehäuse (3) mit Umfangsabstand zur Gehäusewand angeordneten Katalysator-Körper und
- einer in dem Spaltraum (7) zwischen Gehäuse (3) und Katalysator-Körper angeordneten, im wesentlichen aus Mineralfasern bestehenden Lagerungsmatte (8),
dadurch gekennzeichnet,
daß die Lagerungsmatte ein Gestricke oder Gewirke aus einem aus Mineralfasern bestehenden Garn ist und daß die Lagerungsmatte in dem Spaltraum (7) ohne zusätzliche Abdichtung gegenüber den Abgasen angeordnet ist.

2. Vorrichtung nach Anspruch 1,
dadurch gekennzeichnet,
daß die Mineralfasern Endlosfasern sind.

3. Vorrichtung nach Anspruch 2,
dadurch gekennzeichnet,
daß die Mineralfasern SiO₂-Fasern sind.

4. Vorrichtung nach einem oder mehreren der vorgenannten Ansprüche,
dadurch gekennzeichnet,
daß die Mineralfasern mit einem Spinndüsen-Verfahren hergestellt sind.

5. Vorrichtung nach Anspruch 4,
dadurch gekennzeichnet,
daß der Durchmesser der Mineralfasern größer als 3 µm ist.

6. Vorrichtung nach Anspruch 5,
dadurch gekennzeichnet,
daß der Durchmesser der Mineralfasern 6 µm beträgt.

7. Vorrichtung nach einem oder mehreren der vorgenannten Ansprüche,
dadurch gekennzeichnet,
daß sich die Lagerungsmatte (8) von dem als Eintrittstrichter ausgebildeten Anfangsbereich des Gehäuses (3) über den Spaltraum (7) bis zu dem als Austrittstrichter ausgebildeten Endbereich des Gehäuses (3) erstreckt.

## Claims

1. A device for reducing exhaust gas pollutants, in particular for motor vehicles, with
- at least one catalyzer body arranged in a casing (3), with a peripheral interspacing from the casing wall and
- a mounting mat (8) arranged in the gap (7) between the casing (3) and the catalyzer body, consisting in essence of mineral fibres,
characterized in that
the mounting mat is a knitted or woven material of a yarn consisting of mineral fibres, and that the mounting mat is arranged in the gap (7) without an additional seal against the exhaust gases.

2. A device according to claim 1,
characterized in that
the mineral fibres are filaments.

3. A device according to claim 2,
characterized in that
the mineral fibres are SiO₂ fibres.

4. A device according to one or more of the preceding claims,
characterized in that
the mineral fibres are manufactured by means of a spinning jet process.

5. A device according to claim 4,
characterized in that
the diameter of the mineral fibres is greater than 3µm.

6. A device according to claim 5,
characterized in that
the diameter of the mineral fibres amounts to 6µm.

7. A device according to one or more of the preceding claims,
characterized in that
the mounting mat (8) extends from the starting zone of the casing (3), formed as an intake funnel, over the gap (7) as far as the end zone of the casing (3) formed as an outlet funnel.

## Revendications

1. Dispositif pour réduire les produits toxiques dans des gaz d'échappement, en particulier pour des véhicules automobiles, comprenant :
- au moins un corps de catalyseur agencé dans un boîtier (3) à distance périphérique de la paroi du boîtier, et
- une nappe de montage (8), agencée dans l'espace (7) entre le boîtier (3) et le corps de catalyseur, et constituée essentiellement de fibres minérales,
caractérisé en ce que
la nappe de montage est un tissu ou un tricot d'un fil constitué de fibres minérales, et en ce que la nappe de montage est agencée dans l'espace (7) sans étanchement additionnel vis-à-vis des gaz d'échappement.

2. Dispositif selon la revendication 1, caractérisé en ce que les fibres minérales sont des fibres illimitées.

3. Dispositif selon la revendication 2, caractérisé en ce que les fibres minérales sont des fibres de SiO2.

4. Dispositif selon l'une ou plusieurs des revendications précédentes, caractérisé en ce que les fibres minérales sont réalisées par un procédé à buses de filature.

5. Dispositif selon la revendication 4, caractérisé en ce que le diamètre des fibres minérales est supérieur à 3 µm.

6. Dispositif selon la revendication 5, caractérisé en ce que le diamètre des fibres minérales s'élève à 6 µm.

7. Dispositif selon l'une ou plusieurs des revendications précédentes, caractérisé en ce que la nappe de montage (8) s'étend depuis la zone initiale du boîtier (3), réalisée sous la forme d'un entonnoir d'entrée, via l'espace (7) jusqu'à la zone terminale du boîtier (3), réalisée sous la forme d'un entonnoir de sortie.
